# EUROPEAN PATENT SPECIFICATION

(11) **EP 0 703 516 B1**
(45) Date of publication and mention of the grant of the patent: **28.06.2000**
(21) Application number: 95202497.4
(22) Date of filing: 15.09.1995
(51) Int. Cl.: G05B 19/042, G05B 19/10

(54) **Programmable electronic device for the control of irrigation systems**
Programmierbare elektronische Vorrichtung zur Steuerung von Bewässerungssystemen
Appareil électronique programmable pour la commande de systèmes d'irrigation

(30) Priority: 22.09.1994 IT MI941922
(43) Date of publication of application: 27.03.1996
(73) Proprietor: CLABER S.P.A., I-33080 Fiume Veneto Pordenone (IT)
(72) Inventor: Roman, Gianfranco, I-33087 Pasiano (Pordenone) (IT)
(74) Representative: Mittler, Enrico

(56) References cited:
- EP-A- 0 460 676
- DE-A- 3 238 073
- US-A- 4 807 664
- GRUNDIG - MANUAL , - January 1992 pages 6-13, XP002015836 "TV Color Television Manual P37-549/12"

## Description

The present invention relates to a programmable electronic device for the control of irrigation systems, particularly in gardening.

In the sector of gardening articles irrigation systens for green areas are known equipped with valve means for cutting off an irrigation fluid and with control units that drive said valve means in order to determine automatically the instant of activation and disactivation of the irrigation system throughout the entire span of the day, on preset days of the week, on the basis of programs set by the user. In this way, not only is the user freed from the onus of personally activating and disactivating the irrigation system, but it is also possible to ensure the irrigation of the desired green areas during the time when the user is absent, or at night time.

Such an irrigation system is described in the European patent application No. 0482698. It comprises a programmable electronic device having a control unit, a keyboard that allows the user to dialog with the control unit and to insert the data related to one or more irrigation programs, and a display unit to assist the user during the programming steps.

The control unit comprises memories for the programs for activating the irrigation system (in short, irrigation programs), an internal clock, and a register that evolves through a sequence of states corresponding to the various steps of an operation of setting the irrigation programs.

The keyboard has a total of twenty keys: ten numerical keys, corresponding to the decimal figures 0-9, for setting the current time on the control unit's internal clock and to program the instants (hours and minutes) for activating and disactivating the irrigation system; two keys for selecting the area of the memory in which the data introduced by the user are to be stored; two keys for programming the frequency of activation of the irrigation system; four keys for programming the Length of time the irrigation system is to run; one key to activate the function of setting the current time; one key to confirm the data introduced by means of the keyboard.

Substantially, each step of an operation for setting the irrigation programs is activated by a specific key on the keyboard. This makes it rather complicated to use the irrigation system, because it forces the user to know at any time the meaning of the various keys, and the correct sequence of the steps for setting the irrigation programs.

A further irrigation control device is disclosed in US-A-4 807 664. Grunding Manual, "TV-color television Manual, P37-549/12", January 1992, pages 6-13, discloses a TV remote control with five menu setting keys.

In view of the state of the art described, the object of the present invention is that of providing a programmable electronic device for the control of irrigation systems that, other functions being equal, is simpler to use that the one just described.

According to the present invention, such object is achieved with a programmable electronic device as defined in claim 1.

Thanks to the present invention, it is possible to provide a programmable electronic device for the control of irrigation systems that, by using a very limited number of keys of a keyboard and what appears sequentially on the display device, is clearly simple to use and to program.

These and other features of the present invention will be made more evident by the following detailed description of an embodiment thereof, illustrated as a non-limiting example in the enclosed drawings, wherein:
Fig. 1 is a block diagram of an electronic device according to the present invention;
Fig. 2 is a front view of the abovementioned device;
Figs. from 3 to 27 illustrate the various steps of a programming procedure of the abovementioned electronic device;
Figs. from 28 to 32 illustrate the various steps of a procedure for the manual control of the electronic device;
Fig. 33 shows the state of the display device after programming ha been completed but with the electronic device at rest;
Fig. 34 shows the abovementioned device in a particular operating mode.

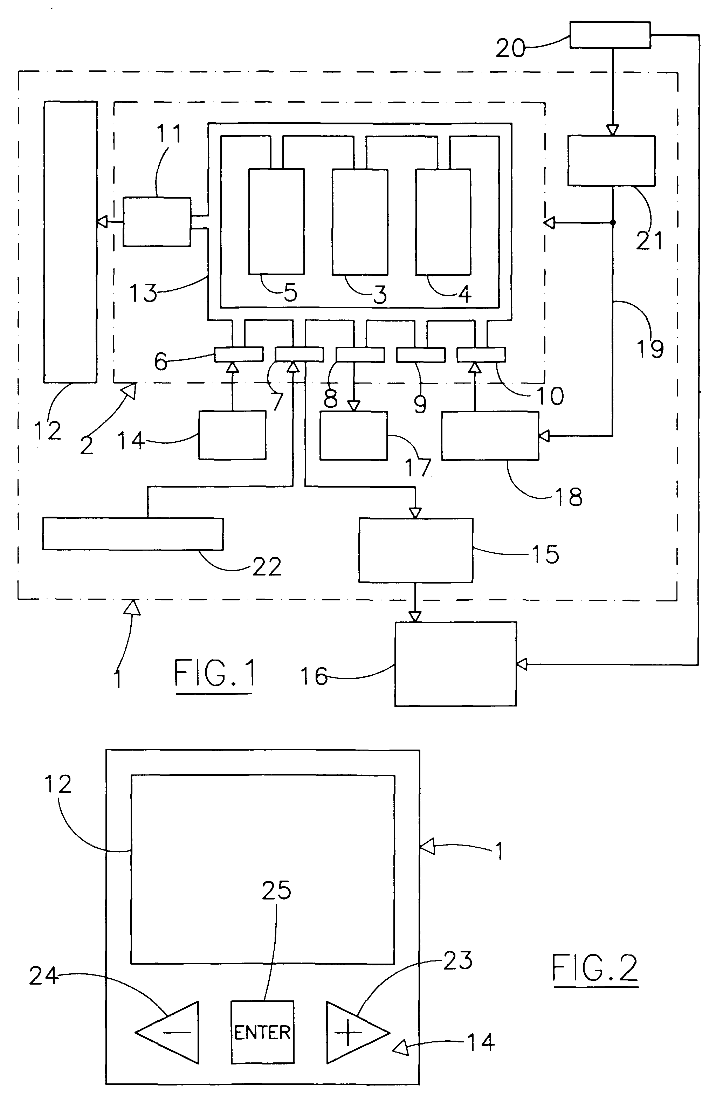

With reference to Fig. 1, a programmable electronic device 1 according to the present invention comprises a control unit 2, constituted by a microprocessor; the microprocessor 2 comprises a central processing unit 3 (CPU), a read-only memory 4 (ROM) and a read-and-write memory 5 (RAM), gates 6-10 for data input and output, and a drive circuit 11 for a liquid crystal display unit 12 external to the microprocessor 2; the central processing unit 3, the memories 4 and 5, the data input and output gates 6-10 and the drive circuit 11 communicate through a signal bus 13. Gates 6-9 allow the input and output of digital signals, while gate 10, provided with an analog-digital converter (not shown), receives from the outside of the microprocessor 2 signals of the analog type and converts them to signals of a digital type, that can then be processed by the central processing unit 3.

The device 1 also comprises: a keyboard 14, connected to gate 6 of microprocessor 2; a driving device 15 of a bistable valve 16 that cuts off the flow of the irrigation fluid, said driving device 15 being connected to gate 7 of microprocessor 2; a buzzer 17 connected to gate 8 of microprocessor (gate that is designed for driving devices of this type); and a group of sensors 18 connected to gate 10 of microprocessor 2, to read the level of the voltage 19 supplied to microprocessor 2 and the level of humidity of the air, as will be explained later.

The device 1 is powered by a battery 20, typically of the 9-volt type, and there is also a voltage stabilizer 21 that lowers (and stabilizes) the value of the voltage of the battery 21 to 5, as required by the microprocessor 2. The battery 9 also powers, directly, the bistable valve 16.

The device 1 is made in the form of a card with a printed circuit; configuration means 22 are also provided on said card, connected to gate 7 of microprocessor 2, consisting of six copper pads, three for configuring the device so that it supports either two or six distinct irrigation periods, and another three to enable the microprocessor 2 for the control of the humidity sensors of unit 18.

Externally, the device 1 has the appearance shown in Fig. 2, the keyboard 14 comprising three keys 23-25, marked "+", "-" and "ENTER", respectively; the display 12 is above keyboard 14.

The read-only memory 4 contains the program (firmware) to be executed by microprocessor 2. In the read and write memory 5, on the other hand, the following data are stored during the operation of microprocessor 2: the current time (hour and minute); the configuration of device 1, read by the microprocessor through gate 7, that is the number of distinct irrigation periods supported by the device 1; the instants (hour and minutes) of opening and closing of the irrigation periods (that are set by the user according to the procedure that will be described later); the days on which the irrigation periods are to run; the data for the control of the driving circuit 11, to be visualized by the display 12.

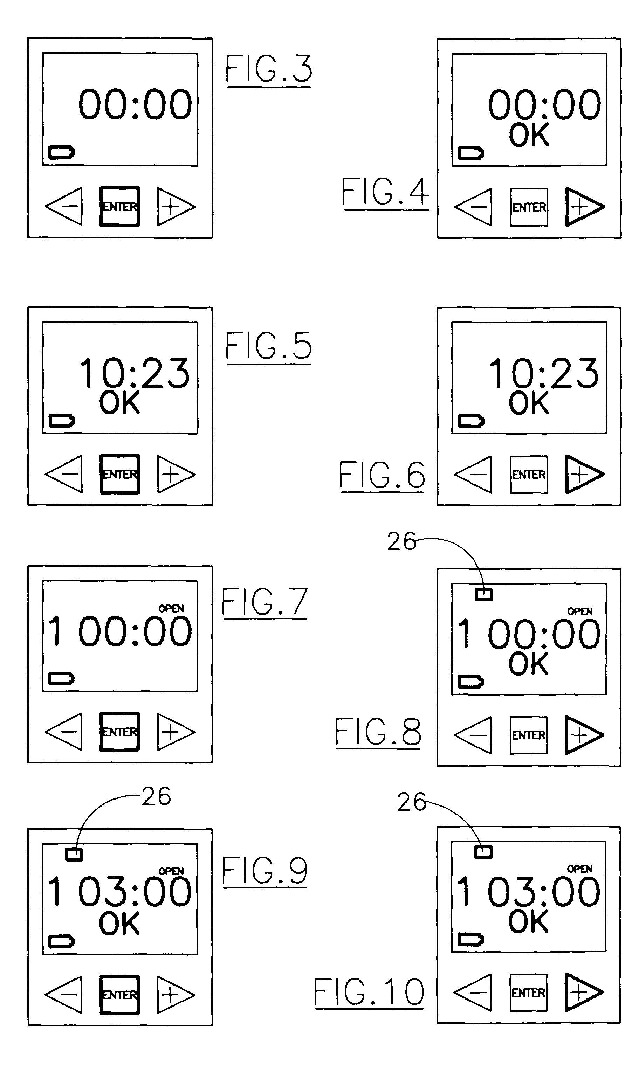

For the introduction of the programming data on the part of the user, the programmable electronic device according to the present invention operates as follows, as shown in Figs. 3-34, where the key that is pressed for the individual operations is highlighted with lines having a greater thickness.

Substantially, the user, by pressing keys 23 or 24, sends appropriate instructions to the microprocessor for visualizing on the display 12 a menu structured in pages, each corresponding to the function of setting-up a respective group of data; the microprocessor 2 visualizes the pages of the menu on the display 12 in a sequential manner, following pressure on keys 23 or 24 (the keys marked with "+" or "-"). To activate the procedure for setting a particular group of data, the corresponding page of the menu should be selected by pressing key 25 ("ENTER"); after the activation of said procedure, keys 23 and 24 allow the user to set the desired data, that microprocessor 2 visualizes on the display 12 to allow the user to check their correctness. At the end of this operation, by pressing key 25, the set data are stored in memory 5, and the programming procedure is disactivated; keys 23, 24 and 25 thus go back to their original function of visualization and selection of the pages of the menu.

More accurately, let us suppose that the device 1 is configured to support six irrigation periods. When the device 1 is switched on (that is, when microprocessor 2 is powered), the microprocessor 2 reads the configuration and stores it in memory 5, it then visualizes on the display 12 the first page of the menu (Fig. 3), that corresponds to the function of setting the current time: the hour and minute of the internal clock of the device 1 appears in a numerical form (the clock is software-provided, consisting of locations of memory 5 that are periodically updated by the central processing unit 3). If the user does not intend to activate the procedure for setting the current time, he can go to the next page of the menu by pressing the key "+".

In order to activate the procedure for setting the current time, the user should press the key "ENTER": the microprocessor 2 visualizes on the display 12, under the hour, the word "OK" (Fig. 4), indicating to the user that the programming of the data has been enabled. With the keys "+" or "-", the user will see the clock run forward or backward, respectively, with an ever increasing speed. When the hour and minute visualized on the display 12 coincide with the current time (Fig. 5), the user should press the key "ENTER" so that the set data is memorized in the respective locations of memory 5. The word "OK" disappears, the procedure for setting the current time ends, and the microprocessor 2 visualizes on the display 12 the current time that has just been set (Fig. 6).

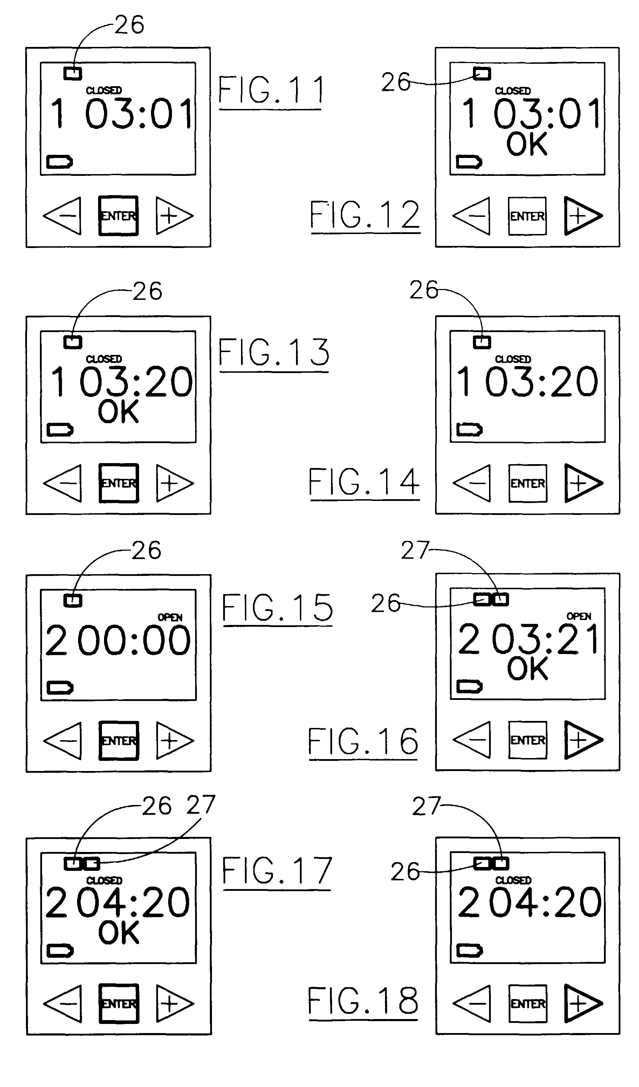

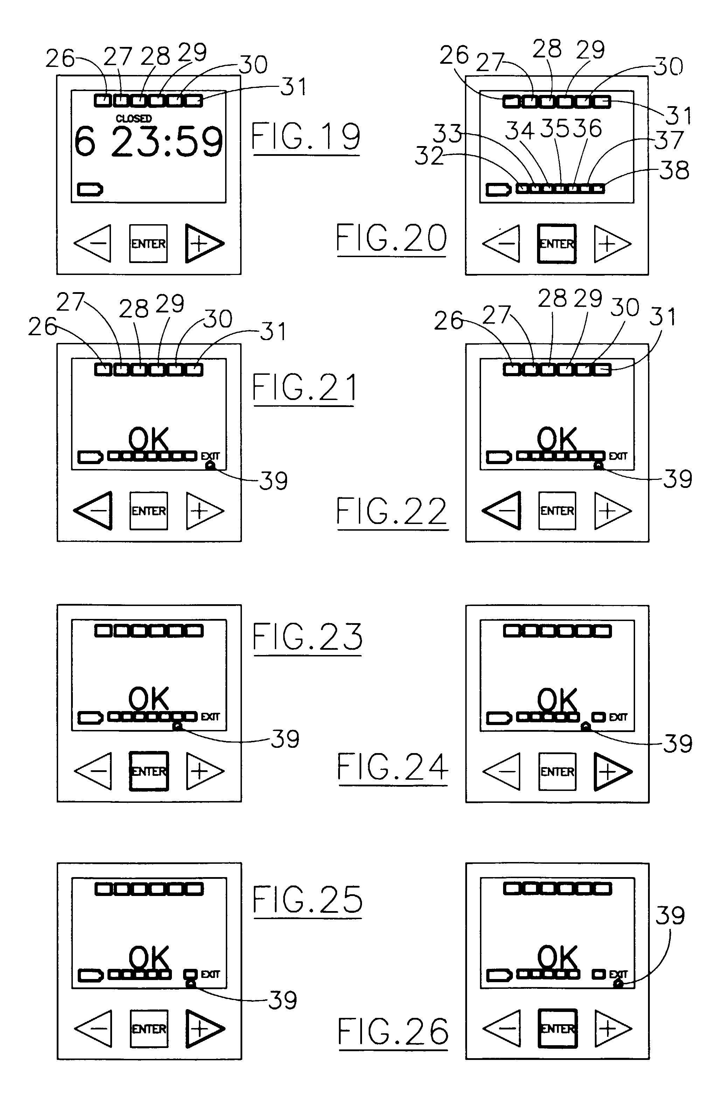

From the first page of the menu, when the key "+" is pressed, the microprocessor 2 visualizes on the display 12 the second page, that corresponds to the function of setting the time of opening of the first irrigation period: to the left of the display 12 the number "1" appears corresponding to the first period of irrigation, the time "00:00" (to show that the first irrigation period is not yet enabled, and the word "OPEN" (Fig. 7). If the user does not intend to activate the procedure for setting the time of opening of the first irrigation period, he can go on to the next page by pressing the key "+". In order to activate the procedure for setting the time of opening of the first irrigation period, the user should press the key "ENTER": the microprocessor 2 visualizes on the display the work "OK", under the time "00:00", the word "OPEN", and a first segment 26 of six segments 26-31 (see Fig. 19) located in the upper part of the display 12 (Fig. 8). As in the previous case, by pressing keys "+" or "-" the user will increase or decrease the time of opening of the first irrigation period (Fig. 9); when the visualized time corresponds to the one desired, say 03:00 hours, the user should press the key "ENTER", so that the microprocessor 2 stores in the RAM 5 the data corresponding to the time of opening of the first irrigation period; the microprocessor 2 checks that the value of the time set is within the range of 00:00 and 23:58, otherwise it does not accept the set value. The word "OK" disappears from the display, the procedure for setting the time of opening of the first irrigation period ends, and the microprocessor 2 visualizes on the display 12 the time that has just been set (Fig. 10).

When the key "+" is pressed, the microprocessor 2 visualizes on the display 12 the third page of the menu, corresponding to the function of setting the time of closing of the first irrigation period (Fig. 11): on the display 12 the number "1" is again visualized corresponding to the first irrigation period, the first segment 26, and a time corresponding to the time of opening of the first irrigation period, previously set, increased by one minute: in the example, 03:01 (that is, the microprocessor 2 automatically sets a minimum duration of opening of one minute); the word "CLOSED" is also automatically visualized on the display 12, that indicates to the user that the page of the menu displayed corresponds to the setting of the closing time. If the user does not intend to activate the setting procedure, since the time displayed already corresponds to the desired time, he can go on to the next page of the menu by pressing the key "+". To activate the setting procedure, the user should press the key "ENTER": in addition to the information visualized in Fig. 11, the microprocessor 2 visualizes on the display 12 the word "OK" (Fig. 12). By pressing the keys "+" or "-" the user can run through the time displayed, until he reaches the desired time, say, 03:20 (Fig. 13); at this point, when the key "ENTER" is pressed, the microprocessor 2 checks that the time set is between the time of opening of the irrigation period plus one minute (that is, 03:01) and 23:59; if this condition obtains, the set time is memorized in memory 5, the word "OK" disapears, and the display 12 continues to visualize the closing time just set, together with the other information of Fig. 11 (Fig. 14).

When the key "+" is pressed the microprocessor 2 visualizes on the display 12 the fourth page of the menu, corresponding to the function of setting the time of opening of the second irrigation period: to the left of the display 12 there appears the number "2", corresponding to the second irrigation period, the time "00:00" (to show that the second irrigation period is not yet enabled, and the word "OPEN"; the first segment 26 also remains visualized, bcause the first irrigation period has been enabled (Fig. 15). If the second irrigation period is not to be enabled, it is enough to press the key "+" to go to the next pages of the menu. In order to activate the procedure for setting the opening time of the second irrigation period, the process is the same as in the previous case, pressing the key "ENTER": on the display 12 the time of closing of the first irrigation period will be visualized increased by one minute, in the example 03:21, and the second segment 27 of the six segments 26-31 (Fig. 16) is switched on. By pressing the keys "+" or "-" the time displayed is made to move on, until the desired time is reached. The process should then be repeated as in the previous case.

By pressing the key "+" the microprocessor 2 visualizes on the display 12 the fifth page of the menu, corresponding to the function of setting the time of closing of the second irrigation period. Pressure on the key "ENTER" determines as in the previous case the activation of the corresponding setting operation. By pressing the keys "+" or "-" the time displayed is made to move on, until the desired time is reached (Fig. 17). The subsequent operation of the key "ENTER" determines the memorization of the time set in memory 5, and the end of the setting procedure. In addition to the first segment 26, the second segment 27 also remains switched on in the display, to indicate that the second irrigation period has also been emabled (Fig. 18).

The same procedure is repeated for setting the times of opening and closing the remaining irrigation periods that the user wishes to enable; for each period that has been enabled, the correspondng segment of the six segments 26-31 is switched on.

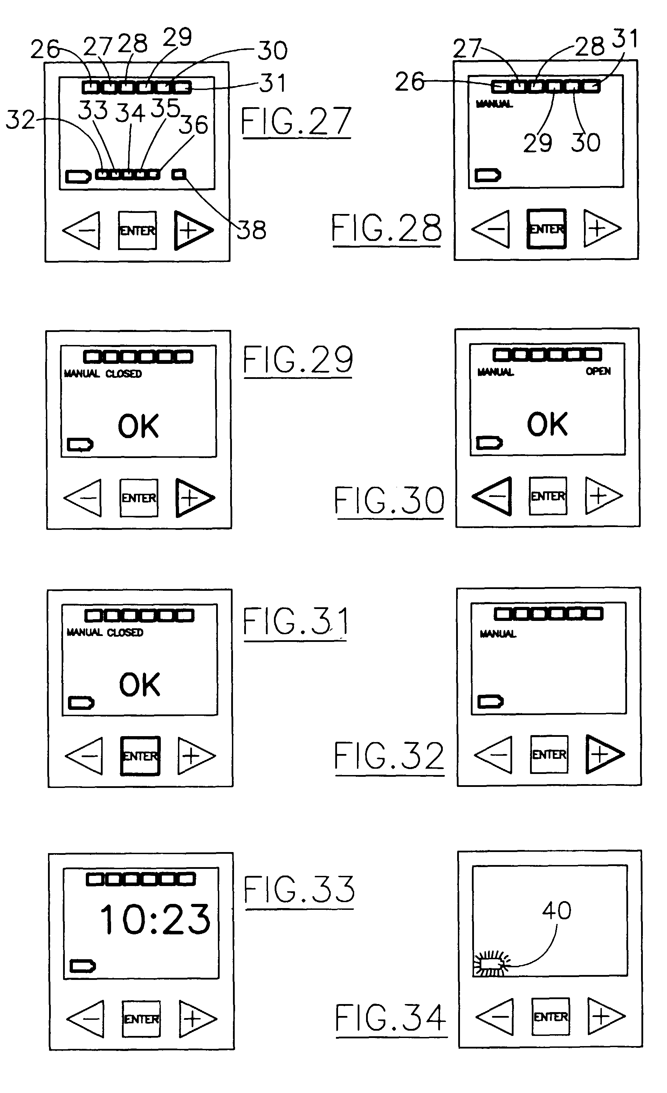

Let us suppose that all the irrigation periods have been enabled; at the end of the procedure for setting the instant of closing of the sixth irrigation period, the time of closing of the sixth irrigation period remains visualized on the display 12 (say, 23:59), and all the six segments 26-31 are switched on (Fig. 19). When the key "+" is pressed the fourteenth page of the menu is reached, corresponding to the function of setting the days of operation: the microprocessor 2 visualizes in the lower part of the display 12 seven segments 32-38, corresponding to the seven days of the week; in the upper part of the display 12 the six segments are also always visualized corresponding to the irrigation periods previously enbled by the setting of the corresponding hours of opening (Fig. 20). In order to activate the procedure for setting the days of operation, the user should press the key "ENTER": the word "OK" will appear on the display 12 and, to one side of the seven segments, the word "EXIT" with a cursor 39 under it (Fig. 21); by pressing the keys "+" or "-" the movement is determined of the cursor towards the right or towards the left, respectively (Figs. 22 and 23). In order to select a particular day of operation, it is necessary to move the cursor 39 under the corresponding segment 32-38, and to press the key "ENTER": the segment will disappear from the display 12, to show that the respective day of the week has been selected; in case of an error, it is sufficient to press the key "ENTER" again: the day will be unselected, and the corresponding segment 32-38 will reappear on the display 12 (Fig. 24). Once the operation of selecting the days of operation has been brought to an end the user should move the cursor 39 again under the word "EXIT" by pressing the key "+", and then press the key "ENTER" (Figs. 25 and 26): the days of operation selected are stored in memory 5, the procedure of setting the days of operation ends, and the segments 32-38 of the days that have not been selected remain visualized on the display 12, still together with the segments 26-31 of the irrigation periods that have been enabled (Fig. 27).

When the key "+" is pressed again, the microprocessor 2 visualizes on the display 12 the fifteenth page of the menu, corresponding to the function of manual control of the device 1 on the part of the user (Fig. 28), that will be described subsequently; on the display 12, under the segments 26-31 corresponding to the irrigation periods, the word "MANUAL" is visualized (Fig. 28).

Once the programming operations just described have been executed, after a further operation of the key "+" the microprocessor 2 visualizes on the display 12 the first page of the menu, and shows the current time, always together with the segments 26-31 corresponding to the irrigation periods that have been enabled (Fig. 33).

If during the programming operations no key is pressed for fifteen minutes, the microprocessor 2 enters into a low-consumption (stand-by) condition; in this condition, the microprocessor 2 checks the level of the charge of the battery 20 (through an input signal at gate 10), and if such level drops below a preset value, it waits for the valve 16 to close and activates the procedure of battery low: it switches off the display 12, causing the symbol 40 of the battery to flash to warn the user of the need to proceed with its replacement, and it does not accept any further instructions (Fig. 34).

During operation, the electronic device executes day by day a constant comparison between the current time and the time of opening of the irrigation periods that have been enabled, all these data having been memorized in memory 5 as described previously. When the current time corresponds to the opening time of one of the irrigation periods, let us assume the first, the microprocessor 2 sends, through gate 7, an instruction to the driving device 15, which in turn controls the opening of the bistable valve 16, and starts irrigation. The microprocessor 2 then executes a constant comparison between the current time and the times of closing of the first irrigation period. When the current time corresponds to the closing time of the first irrigation period, the microprocessor 2 sends, again through gate 7, an instruction to the driving device 15, which in turn controls the closing of the bistable valve 16. The same process takes place for all the remaining irrigation periods that have been enabled.

If the electronic device 1, through the configuration means 22, has been configured so that the microprocessor 2 is enabled for the control of the signals from the humidity sensors of the unit 18, the microprocessor 2 executes a check of the level of humidity present in the air and, if this exceeds a preset value, it sends an instruction to the driving device 15 to close the valve 16, if this is open, or it inhibits its opening even when the current time coincides with the time of opening of one of the irrigation periods that have been enabled.

But if instead of following the programming operations the user wishes to operate the manual control of the device, it is necessary to press the key "+" until the abovementioned fifteenth page of the menu is reached and the word "MANUAL" is visualized on the display 12 (Fig. 28). When the key "ENTER" is pressed the procedure for manual control is activated, and the display 12 visualizes the word "OK", and the word "OPEN" or the word "CLOSED" according as to whether the bistable valve 16 is open or closed (the current state of the valve 16 is stored in a location of the memory 5) (Fig. 29). If we assume that the bistable valve 16 is closed, its opening is determined by pressing the key "+" (the microprocessor 2 sends, through gate 7, an instruction to the driving device 15, which opens the bistable valve 16); the word "OPEN" is then visualized on the display 12 (Fig. 30). If after fifteen minutes the bistable valve 16 is still open, the microprocessor 2 sends an instruction to the driving device 15 for closing the valve 16, and disactivates the procedure for the manual control of the device. But if the user presses the key "ENTER", the microprocessor checks that he has previously closed the bistable valve 16 (by pressing the key "-") (Fig. 31): if this condition obtains, the microprocessor 2 disactivates the procedure for manual control, highlighted by the disappearance of the word "OK" from the display 12 (Fig. 32), otherwise it prevents the exit from the manual operation mode.

## Claims

1. A programmable electronic device for the control of irrigation systems provided with valve means (16) for cutting off an irrigation fluid, comprising a processing unit (2) that drives the opening and closing of said valve means (16) and is provided with at least one memory (5) for storing irrigation programming data, a display (12) driven by said processing unit (2) for selective visualisation of said irrigation programming data, and a keyboard (14) operatively connected to said processing unit (2),
characterized in that said irrigation programming data are organized as a plurality of pages of a menu, each page including a respective group of irrigation programming data and being separately visualised on the display (12), and said keyboard (14) comprises first, second and third keys (23, 25, 24) for controlling the visualisation of the irrigation programming data on said display (12), the second key (25) being operable to activate a procedure for introducing and/or changing the irrigation programming data in the currently visualized page of the menu and for storing the new programming data at the end of said procedure, the first and third keys (23, 24) being operable to introduce and/or change the irrigation programming data in the currently visualised page of the menu during said procedure and being also operable to change the currently visualized page on said display (12) when said procedure is not activated.

2. A device according to claim 1, characterized in that said menu comprises:
- a first page for setting the current hour and minute for the synchronization of an internal clock of the processing unit (2);
- at least one second page and one third page, for setting the instant of starting and the instant of ending,
respectively, of at least one respective irrigation period, during which the device must drive the opening of said valve means (16).

3. A device according to claim 2, characterized in that said menu also comprises a fourth page for setting the days of activation of said at Least one irrigation period.

4. A device according to claim 3, characterized in that the processing unit (2) executes a constant comparison between the day, the hour and minute of the internal clock with the instants of starting and ending of said irrigation period, and operates the opening or the closing of said valve means (16) when the day, the hour and minute coincides with the instant of start or of finish, respectively, of said irrigation period.

5. A device according to any of the preceding claims, characterized in that said menu comprises one page for the manual operation of said valve means (16).

6. A device according to claim 1, characterized in that said first and third keys (23, 24) drive the sequential visualisation forward or backward, respectively, of said pages.

7. A device according to any of the preceding claims, characterized in that said at least one second page and one third page comprise a plurality of second and of third pages, respectively, for setting the instants of starting and the instants of ending a respective plurality of distinct irrigation periods.

8. A device according to claim 1, characterized in that it comprises sensor means (18) to read the level of humidity in the air operatively connected to the processing unit (2), the processing unit inhibiting the opening of said valve means when said level of humidity exceeds a prescribed threshold.

9. A device according to claim 8, characterized in that it comprises configuration means (14) operatively connected to said processing unit (2) to enable or disable the processing unit (2) for the control of said sensor means.

## Patentansprüche

1. Programmierbare elektronische Steuervorrichtung für Bewässerungssysteme mit Ventileinrichtungen (16) zum Absperren eines Bewässerungsfluids, welche eine Verarbeitungsseinheit (2) aufweist, welche das Öffnen und Schließen der Ventileinrichtungen (16) betreibt und wenigstens einen Speicher (5) zum Speichern von Bewässerungsprogrammdaten, eine durch die Verarbeitungseinheit (2) betriebene Anzeigeeinrichtung (12) zur selektiven Sichtanzeige der Bewässerungsprogrammdaten und eine Tastatur (14) aufweist, welche mit der Verarbeitungseinheit (2) betriebsverbunden ist,
**dadurch gekennzeichnet**, daß die Bewässerungsprogrammdaten in Form einer Mehrzahl von Seiten eines Menüs organisiert sind, jede Seite eine entsprechende Gruppe von Bewässerungsprogrammdaten umfaßt und gesondert an der Anzeigeeinrichtung (12) als Sichtanzeige angezeigt wird, die Tastatur (14) erste, zweite und dritte Tasten (23, 25, 24) zum Steuern der Sichtanzeige der Bewässerungsprogrammdaten auf der Anzeigeeinrichtung (12) aufweist, die zweite Taste (25) zur Aktivierung einer Prozedur zum Eingeben und/oder Ändern der Bewässerungsprogrammdaten der momentan in der Sichtanzeige vorliegenden Seite des Menüs und zum Speichern der neuen Programmdaten am Ende der Prozedur betätigbar ist, und daß die ersten und dritten Tasten (23, 24) zum Eingeben und/oder Ändern der Bewässerungsprogrammdaten in der momentan als Sichtanzeige vorliegenden Anzeige des Menüs während der Prozedur betätigbar und auch so betätigbar sind, daß die momentan als Sichtanzeige vorliegende Seite auf der Anzeigeeinrichtung (12) geändert wird, wenn die Prozedur nicht aktiviert ist.

2. Steuervorrichtung nach Anspruch 1, **dadurch gekennzeichnet**, daß das Menü folgendes aufweist:
- eine erste Seite zur Einstellung der momentanen Stunde und Minute für die Synchronisation eines internen Zeitgebers der Verarbeitungseinheit (1);
- wenigstens eine zweite Seite und eine dritte Seite zur Einstellung des Anfangszeitpunktes und des Endzeitpunktes von jeweils wenigstens einer zugeordneten Bewässerungsperiode, während der die Steuervorrichtung zum Öffnen der Ventileinrichtungen (16) betrieben werden muß.

3. Steuervorrichtung nach Anspruch 2, **dadurch gekennzeichnet**, daß das Menü auch eine vierte Seite zur Einstellung der Tage der Aktivierung wenigstens einer Bewässerungsperiode aufweist.

4. Steuervorrichtung nach Anspruch 3, **dadurch gekennzeichnet**, daß die Verarbeitungseinheit (2) einen konstanten Vergleich zwischen dem Tag, der Stunde und der Minute des internen Zeitgebers mit den Zeitpunkten für den Beginn und das Ende der Bewässerungsperiode vornimmt, und das Öffnen oder Schließen der Ventileinrichtungen (16) betreibt, wenn der Tag, die Stunde und die Minute mit dem Anfangszeitpunkt oder dem Endzeitpunkt der jeweiligen Bewässerungsperiode übereinstimmen.

5. Steuervorrichtung nach einem der vorangehenden Ansprüche, **dadurch gekennzeichnet**, daß das Menü eine Seite für die manuelle Bedienung der Ventileinrichtungen (16) aufweist.

6. Steuervorrichtung nach Anspruch 1, **dadurch gekennzeichnet**, daß die ersten und dritten Tasten (23, 24) sequentiell die Sichtanzeige in Vorwärtsrichtung oder in Rückwärtsrichtung zum Durchblättern der Seiten weiterschalten.

7. Steuervorrichtung nach einem der vorangehenden Ansprüche, **dadurch gekennzeichnet**, daß wenigstens eine zweite Seite und eine dritte Seite eine Mehrzahl von zweiten und dritten Seiten jeweils zur Einstellung der Anfangszeitpunkte und der Endzeitpunkte jeweils einer Mehrzahl von bestimmten Bewässerungsperioden aufweisen.

8. Steuervorrichtung nach Anspruch 1, **dadurch gekennzeichnet**, daß sie Sensoreinrichtungen (18) zum Lesen des Feuchtigkeitswertes der Luft aufweist, welche mit der Verarbeitungseinheit (2) betriebsverbunden sind, und daß die Verarbeitungseinheit das Öffnen der Ventileinrichtungen unterdrückt, wenn der Feuchtigkeitspegel einen vorbestimmten Schwellwert überschreitet.

9. Steuervorrichtung nach Anspruch 8, **dadurch gekennzeichnet**, daß sie eine Konfigurationseinrichtung (14) aufweist, welche mit der Verarbeitungseinheit (2) betriebsverbunden ist, um die Verarbeitungseinheit (2) zur Steuerung der Sensoreinrichtungen zu aktivieren oder zu desaktivieren.

## Revendications

1. Dispositif électronique programmable pour commander des systèmes d'irrigation pourvus d'un moyen de valve (16) pour couper un fluide d'irrigation, comprenant une unité de traitement (2) qui commande l'ouverture et la fermeture dudit moyen de valve (16) et est pourvu d'au moins une mémoire (5) pour stocker des données de programmation d'irrigation, et un affichage (12) commandé par ladite unité de traitement (2) pour une visualisation sélective desdites données de programmation d'irrigation, et un clavier (14) raccordé fonctionnellement à ladite unité de traitement (2), caractérisé en ce que lesdites données de programmation d'irrigation sont organisées comme une pluralité de pages d'un menu, chaque page comprenant un groupe respectif de données de programmation d'irrigation et étant visualisée séparément sur l'affichage (12), et ledit clavier (14) comprend des première, seconde et troisième touches (23, 25, 24) pour commander la visualisation des données de programmation d'irrigation sur ledit affichage (12), la seconde touche (25) étant utilisable pour activer une procédure pour introduire et/ou changer les données de programmation d'irrigation dans la page visualisée actuellement du menu et pour stocker les nouvelles données de programmation à la fin de ladite procédure, lesdites première et troisième touches (23, 24) étant utilisables pour introduire et/ou changer les données de programmation d'irrigation dans la page visualisée actuellement du menu pendant ladite procédure et étant aussi utilisables pour changer la page visualisée actuellement sur ledit affichage (12) lorsque ladite procédure n'est pas activée.

2. Dispositif selon la revendication 1,
caractérisé en ce que ledit menu comprend :
une première page pour régler l'heure et les minutes actuelles pour la synchronisation d'une horloge interne de l'unité de traitement (2) ;
au moins une seconde page et une troisième page pour régler l'instant de démarrage et l'instant de fin, respectivement, d'au moins une période d'irrigation respective, pendant laquelle le dispositif doit commander l'ouverture dudit moyen de valve (16).

3. Dispositif selon la revendication 2,
caractérisé en ce que ledit menu comprend aussi une quatrième page pour régler les jours d'activation de ladite au moins une période d'irrigation.

4. Dispositif selon la revendication 3,
caractérisé en ce que l'unité de traitement (2) exécute une comparaison constante entre le jour, l'heure et les minutes de l'horloge interne avec les instants de démarrage et de fin de ladite période d'irrigation, et actionne l'ouverture ou la fermeture dudit moyen de valve (16) lorsque le jour, l'heure et la minute coïncident avec l'instant de début ou de fin, respectivement, de ladite période d'irrigation.

5. Dispositif selon l'une quelconque des revendications précédentes, caractérisé en ce que ledit menu comprend une page pour l'actionnement manuel dudit moyen de valve (16).

6. Dispositif selon la revendication 1,
caractérisé en ce que lesdites première et troisième touches (23, 24) commandent la visualisation séquentielle vers l'avant ou vers l'arrière, respectivement, desdites pages.

7. Dispositif selon l'une quelconque des revendications précédentes, caractérisé en ce que ladite au moins une seconde page et une troisième page comprend une pluralité de secondes et de troisièmes pages, respectivement, pour régler les instants de démarrage et les instants de fin d'une pluralité respective de périodes d'irrigation distinctes.

8. Dispositif selon la revendication 1, caractérisé en ce qu'il comprend un moyen de capteur (18) pour lire le niveau d'humidité dans l'air relié fonctionnellement à l'unité de traitement (2), l'unité de traitement inhibant l'ouverture dudit moyen de valve lorsque ledit niveau d'humidité dépasse un seuil prescrit.

9. Dispositif selon la revendication 8,
caractérisé en ce qu'il comprend un moyen de configuration (14) relié fonctionnellement à ladite unité de traitement (2) pour valider ou invalider l'unité de traitement (2) pour la commande dudit moyen de capteurs.
